# EUROPEAN PATENT APPLICATION

(11) **EP 4 518 425 A1**
(43) Date of publication of application: **05.03.2025**
(21) Application number: 22939036.4
(22) Date of filing: 27.04.2022
(51) Int. Cl.: H04W 36/00, H04W 36/30

(54) **RELEVANT INFORMATION RECORDING METHOD AND APPARATUS FOR SUCCESSFUL PSCELL ADDITION OR REPLACEMENT REPORT**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/089682
(87) International publication number: WO 2023/206183

(57) **Abstract**

The present invention belongs to the technical field of communications, and provides a relevant information recording method and apparatus for a successful PScell addition or replacement report, a device and a storage medium. The method comprises recording relevant information about PScell addition or replacement in response to triggering a successful PScell addition or replacement report (101). Thus, the present invention provides a processing method for the situation "temporarily not supporting the recording of relevant information about a successful PScell addition or replacement report", so as to provide additional confirmation opportunities and ensure the success rate of PScell addition or replacement.

## Description

### FIELD

The present invention relates to the field of communication technologies, and more particularly relates to a method, an apparatus and a device for recording relevant information of a successful primary secondary cell (PScell) addition or change report, and a storage medium.

### BACKGROUND

In a communication system, a network side device may configure a triggerring condition for a PScell addition or change for a terminal device, and the terminal device may perform the PScell addition or change when the condition is met.

However, after the PScell is changed or added, the recording of relevant information when reporting a successful PScell addition or change is not supported for now. Therefore, if the PScell addition or change fails or the relevant information of the successful PScell addition or change report is not recorded when reporting the successful PScell addition or change, subsequent transmission services may be affected, such as dropped calls. Therefore, there is an urgent need for a method for "recording relevant information of a successful PScell addition or change report" to provide additional confirmation opportunities and ensure the success rate of the PScell addition or change.

### SUMMARY

The present invention proposes a method, an apparatus and a device for recording relevant information of a successful PScell addition or change report, and a storage medium, so as to provide additional confirmation opportunities and ensure the success rate of the PScell addition or change.

A method for recording relevant information of a successful primary secondary cell (PScell) addition or change report proposed in embodiments of a first aspect of the present invention is performed by a terminal device, including: recording relevant information of the PScell addition or change in response to triggering the successful PScell addition or change report.

Optionally, in an embodiment of the present disclose, recording the relevant information of the PScell addition or change includes at least one of: recording public land mobile network (PLMN) list information related to a PScell, in which the PLMN list information includes at least one of PLMN information, equivalent local public land mobile network (EPLMN) information or registered public land mobile network (RPLMN) information; recording a cell identifier of the PScell addition or change; recording a measurement result of the PScell addition or change; recording time information of the PScell addition or change; recording random access information of the PScell addition or change; recording type information of the successful PScell addition or change report; or recording cell radio network temporary identifier (C-RNTI) information of a target cell of the PScell addition or change.

Optionally, in an embodiment of the present disclose, recording the cell identifier of the PScell addition or change includes: recording a source cell identifier of the PScell addition or change in a case that the type information of the successful PScell addition or change report is a successful PScell change report or a successful conditional PScell change report, in which the source cell identifier is a global cell identity of a source cell and a tracking area code of the source cell, or is a physical cell identity of the source cell and a carrier frequency of the source cell; and/or recording a target cell identifier of the PScell addition or change, in which the target cell identifier is a global cell identity of the target cell and a tracking area code of the target cell, or is a physical cell identity of the target cell and a carrier frequency of the target cell.

Optionally, in an embodiment of the present disclose, a data type of the source cell identifier is a cell global identity information logging (CGI-Info-Logging), or a combination of a physical cell identity (PhysCellId) and an absolute radio frequency channel number value (ARFCN-Value); and a data type of the target cell identifier is the CGI-Info-Logging, or a combination of the PhysCellId and the ARFCN-Value.

Optionally, in an embodiment of the present disclose, recording the measurement result of the PScell addition or change includes at least one of: recording a source cell measurement result of the PScell addition or change; recording a target cell measurement result of the PScell addition or change; or recording a neighboring cell measurement result of the PScell addition or change.

Optionally, in an embodiment of the present disclose, the source cell measurement result includes at least one of: at least one of a reference signal received power (RSRP), a reference signal received quality (RSRQ), or a signal to interference plus noise ratio (SINR) of a cell-level synchronization signal block (SSB) or channel state information-reference signal (CSI-RS); or at least one of an RSRP, an RSRQ, or an SINR of each SSB or CSI-RS.

Optionally, in an embodiment of the present disclose, recording the neighboring cell measurement result of the PScell addition or change includes: recording a new air (NR) measurement result of the PScell addition or change and an evolved universal mobile telecommunications system (UMTS) terrestrial radio access network (EUTRA) measurement result of the PScell addition or change.

Optionally, in an embodiment of the present disclose, a data type of the NR measurement result is an NR network measurement result list MeasResultList2NR, and a data type of the EUTRA measurement result is a long-term evolution (LTE) network measurement result list MeasResultList2EUTRA.

Optionally, in an embodiment of the present disclose, recording the time information of the PScell addition or change includes at least one of: recording a time interval between a reception time point of the PScell addition or change and an execution starting time point of the PScell addition or change; or recording user plane interruption time information of the PScell change, in which the user plane interruption time information is used to indicate a user plane interruption time of the terminal device when performing the PScell change.

Optionally, in an embodiment of the present disclose, a data type of the time information is an integer type (INTEGER).

Optionally, in an embodiment of the present disclose, a triggering condition for recording the random access information of the PScell addition or change is: starting a timer, and triggering a random access operation in a case that the timer reaches a timing threshold.

Optionally, in an embodiment of the present disclose, a data type of the random access information is radio access information common (RA-InformationCommon).

Optionally, in an embodiment of the present disclose, a data type of the C-RNTI information is a radio network temporary identifier value (RNTI-Value).

Optionally, in an embodiment of the present disclose, the relevant information is recorded in a successful PScell addition or change variable report (VarSuccessPAC-Report).

A method for recording relevant information of a successful PScell addition or change report proposed in embodiments of a second aspect of the present invention is performed by a network side device, including: receiving relevant information of the PScell addition or change sent by a terminal device.

Optionally, in an embodiment of the present disclose, receiving the relevant information of the PScell addition or change sent by the terminal device includes at least one of: receiving PLMN list information related to a PScell sent by the terminal device, in which the PLMN list information includes at least one of PLMN information, EPLMN information or RPLMN information; receiving a cell identifier of the PScell addition or change sent by the terminal device; receiving a measurement result of the PScell addition or change sent by the terminal device; receiving time information of the PScell addition or change sent by the terminal device; receiving random access information of the PScell addition or change sent by the terminal device; receiving type information of the successful PScell addition or change report sent by the terminal device; or receiving C-RNTI information of a target cell of the PScell addition or change sent by the terminal device.

Optionally, in an embodiment of the present disclose, receiving the measurement result of the PScell addition or change sent by the terminal device includes at least one of: receiving a source cell measurement result of the PScell addition or change sent by the terminal device; receiving a target cell measurement result of the PScell addition or change sent by the terminal device; or receiving a neighboring cell measurement result of the PScell addition or change sent by the terminal device.

An apparatus for recording relevant information of a successful PScell addition or change report proposed in embodiments of yet another aspect of the present invention includes: a recording module configured to record relevant information of the PScell addition or change in response to triggering the successful PScell addition or change report.

An apparatus for recording relevant information of a successful PScell addition or change report proposed in embodiments of yet another aspect of the present invention includes: a receiving module configured to receive relevant information of the PScell addition or change sent by a terminal device.

A communication device proposed in embodiments of yet another aspect of the present invention includes a processor and a memory having stored therein a computer program, in which the processor is configured to execute the computer program stored in the memory to cause the device to perform the method according to the above embodiments of the first aspect of the present invention.

A communication device proposed in embodiments of yet another aspect of the present invention includes a processor and a memory having stored therein a computer program, in which the processor is configured to execute the computer program stored in the memory to cause the device to perform the method according to the above embodiments of the second aspect of the present invention.

A communication device proposed in embodiments of yet another aspect of the present invention includes a processor and an interface circuit configured to receive code instructions and transmit the code instructions to the processor, in which the processor is configured to run the code instructions to perform the method according to the above embodiments of the first aspect of the present invention.

A communication device proposed in embodiments of yet another aspect of the present invention includes a processor and an interface circuit configured to receive code instructions and transmit the code instructions to the processor, in which the processor is configured to run the code instructions to perform the method according to the above embodiments of the second aspect of the present invention.

A computer-readable storage medium proposed in embodiments of yet another aspect of the present invention is configured to store instructions that, when executed, cause the method according to the above embodiments of the first aspect of the present invention to be implemented.

A computer-readable storage medium proposed in embodiments of yet another aspect of the present invention is configured to store instructions that, when executed, cause the method according to the above embodiments of the second aspect of the present invention to be implemented.

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the relevant information of the PScell addition or change, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

### BRIEF DESCRIPTION OF THE DRAWINGS

These and other aspects and advantages of the present invention will become apparent and more readily appreciated from the following descriptions of embodiments made with reference to the drawings, in which
FIG. 1 is a schematic flowchart of a method for recording relevant information of a successful PScell addition or change report provided in an embodiment of the present invention;
FIG. 2 is a schematic flowchart of a method for recording relevant information of a successful PScell addition or change report provided in another embodiment of the present invention;
FIG. 3 is a schematic flowchart of a method for recording relevant information of a successful PScell addition or change report provided in still another embodiment of the present invention;
FIG. 4 is a schematic flowchart of a method for recording relevant information of a successful PScell addition or change report provided in yet another embodiment of the present invention;
FIG. 5 is a schematic flowchart of a method for recording relevant information of a successful PScell addition or change report provided in yet another embodiment of the present invention;
FIG. 6 is a schematic flowchart of a method for recording relevant information of a successful PScell addition or change report provided in yet another embodiment of the present invention;
FIG. 7 is a schematic flowchart of a method for recording relevant information of a successful PScell addition or change report provided in yet another embodiment of the present invention;
FIG. 8 is a schematic flowchart of a method for recording relevant information of a successful PScell addition or change report provided in yet another embodiment of the present invention;
FIG. 9 is a schematic flowchart of a method for recording relevant information of a successful PScell addition or change report provided in yet another embodiment of the present invention;
FIG. 10 is a schematic diagram of an apparatus for recording relevant information of a successful PScell addition or change report provided in an embodiment of the present invention;
FIG. 11 is a schematic diagram of an apparatus for recording relevant information of a successful PScell addition or change report provided in another embodiment of the present invention;
FIG. 12 is a block diagram of a terminal device provided in an embodiment of the present invention;
FIG. 13 is a block diagram of a network side device provided in an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. Instead, they are merely examples of apparatuses and methods consistent with some aspects related to embodiments of the present invention as recited in the appended claims.

Terms used herein in embodiments of the present invention are only for the purpose of describing specific embodiments, but should not be construed to limit the present invention. As used in the embodiments of the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "in case" and "if" may be construed to mean "when" or "upon" or "in response to determining" depending on the context.

A method, an apparatus and a device for recording relevant information of the successful PScell addition or change report as well as a storage medium provided in embodiments of the present invention are described in detail below with reference to the accompanying drawings.

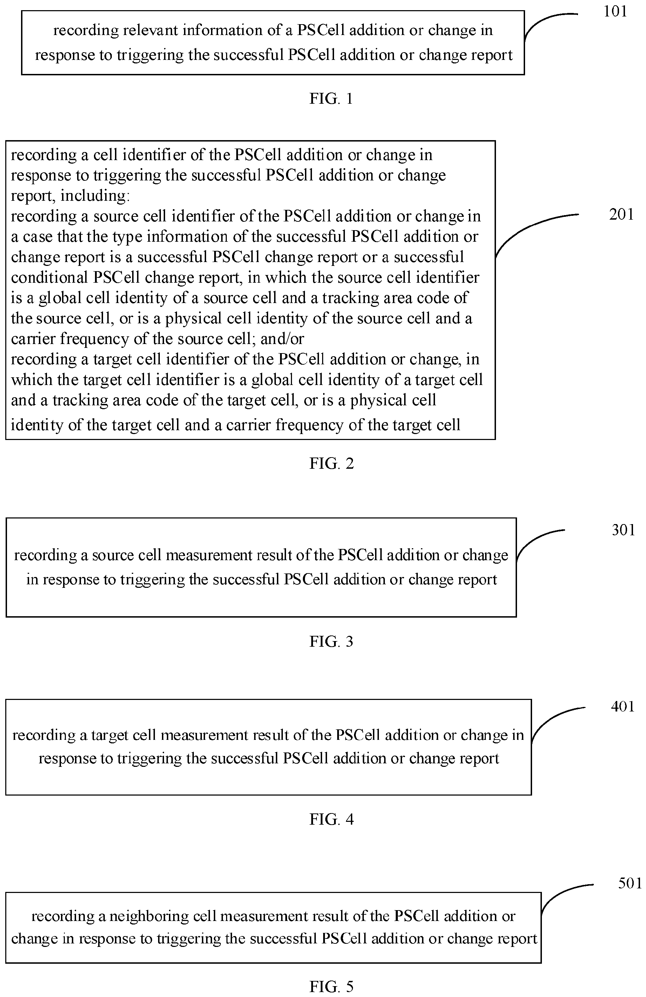

FIG. 1 is a schematic flowchart of a method for recording relevant information of a successful PScell addition or change report provided in an embodiment of the present invention. The method is performed by a terminal device. As shown in FIG. 1, the method may include a step as follows.

In step 101, relevant information of the PScell addition or change is recorded in response to triggering the successful PScell addition or change report.

It should be noted that in an embodiment of the present invention, the terminal device may refer to a device that provides voice and/or data connectivity to a user. The terminal device can communicate with one or more core networks via a radio access network (RAN). The terminal device can be an Internet of things (IoT) terminal, such as a sensor device, a mobile phone (or a "cellular" phone), and a computer with an IoT terminal, for example, a fixed, portable, pocket-sized, handheld, computer-built-in, or in-vehicle device. For example, the terminal device is a station (STA), a subscriber unit, a subscriber station, a mobile station, a mobile, a remote station, an access point, a remote terminal, an access terminal, a user terminal or a user agent. Alternatively, the terminal device may also be a device of an unmanned aerial vehicle. Alternatively, the terminal device may also be an in-vehicle device, for example, a driving computer with a wireless communication function, or a wireless terminal externally connected to a driving computer. Alternatively, the terminal device may also be a roadside device, for example, a street lamp, a signal lamp or other roadside devices with a wireless communication function.

In an embodiment of the present invention, recording the relevant information of the PScell addition or change by the terminal device includes at least one of: recording public land mobile network (PLMN) list information related to a PScell, in which the PLMN list information comprises at least one of PLMN information, equivalent local public land mobile network (EPLMN) information or registered public land mobile network (RPLMN) information; recording a cell identifier of the PScell addition or change; recording a measurement result of the PScell addition or change; recording time information of the PScell addition or change; recording random access information of the PScell addition or change; recording type information of the successful PScell addition or change report; or recording cell radio network temporary identifier (C-RNTI) information of a target cell of the PScell addition or change.

In an embodiment of the present invention, recording the cell identifier of the PScell addition or change by the terminal device includes at least one of: recording a source cell identifier of the PScell addition or change in a case that the type information of the successful PScell addition or change report is a successful PScell change report or a successful conditional PScell change report, in which the source cell identifier is a global cell identity of a source cell and a tracking area code of the source cell, or is a physical cell identity of the source cell and a carrier frequency of the source cell; or recording a target cell identifier of the PScell addition or change, in which the target cell identifier is a global cell identity of the target cell and a tracking area code of the target cell, or is a physical cell identity of the target cell and a carrier frequency of the target cell.

In an embodiment of the present invention, the terminal device may trigger the successful PScell addition or change report. The PScell addition or change may include one or more of conditional PScell addition (CPA), conditional PScell change (CPC), conditional PScell addition/change (CPAC). In addition, a network side device can directly configure the PScell addition or change other than CPAC.

In an embodiment of the present invention, a data type of the source cell identifier is a cell global identity information logging (CGI-Info-Logging), or a combination of a physical cell identity (PhysCellId) and an absolute radio frequency channel number value (ARFCN-Value); and a data type of the target cell identifier is the CGI-Info-Logging, or a combination of the PhysCellId and the ARFCN-Value.

In an embodiment of the present invention, recording the measurement result of the PScell addition or change by the terminal device includes at least one of: recording a source cell measurement result of the PScell addition or change; recording a target cell measurement result of the PScell addition or change; or recording a neighboring cell measurement result of the PScell addition or change.

Further, in an embodiment of the present invention, the source cell measurement result includes at least one of: at least one of a reference signal received power (RSRP), a reference signal received quality (RSRQ), or a signal to interference plus noise ratio (SINR) of a cell-level synchronization signal block (SSB) or channel state information-reference signal (CSI-RS); or at least one of an RSRP, an RSRQ, or an SINR of each SSB or CSI-RS.

In an embodiment of the present invention, recording the neighboring cell measurement result of the PScell addition or change by the terminal device includes: recording a new air (NR) measurement result of the PScell addition or change and an evolved universal mobile telecommunications system (UMTS) terrestrial radio access network (EUTRA) measurement result of the PScell addition or change.

For example, in an embodiment of the present invention, a data type of the NR measurement result is an NR network measurement result list MeasResultList2NR, and a data type of the EUTRA measurement result is a long-term evolution (LTE) network measurement result list MeasResultList2EUTRA.

For example, in an embodiment of the present invention, recording the time information of the PScell addition or change by the terminal device includes at least one of: recording a time interval between a reception time point of the PScell addition or change and an execution starting time point of the PScell addition or change; or recording user plane interruption time information of the PScell change, in which the user plane interruption time information is used to indicate a user plane interruption time of the terminal device when performing the PScell change.

For example, in an embodiment of the present invention, a data type of the time information is an integer type (INTEGER).

For example, in an embodiment of the present invention, a triggering condition for recording the random access information of the PScell addition or change is: starting a timer, and triggering a random access operation in a case that the timer reaches a timing threshold.

For example, in an embodiment of the present invention, a data type of the random access information is radio access information common (RA-InformationCommon).

For example, in an embodiment of the present invention, a data type of the C-RNTI information is a radio network temporary identifier value (RNTI-Value).

For example, in an embodiment of the present invention, the relevant information is recorded in a successful PScell addition or change variable report (VarSuccessPAC-Report).

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the relevant information of the PScell addition or change, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

It should be noted that the method for recording relevant information of the successful PScell addition or change report provided in the following embodiments may be applied to both an NR and an EUTRA, and may report the successful PScell addition or change report in the NR and the EUTRA, respectively.

For example, a method for recording relevant information of a successful PScell addition or change report provided in an embodiment of the present invention is performed by a terminal device and includes a step as follows: recording relevant information of the PScell addition or change in response to triggering the successful PScell addition or change report, including at least one of: recording public land mobile network (PLMN) list information related to a PScell, in which the PLMN list information comprises at least one of PLMN information, equivalent local public land mobile network (EPLMN) information or registered public land mobile network (RPLMN) information; recording a cell identifier of the PScell addition or change; recording a measurement result of the PScell addition or change; recording time information of the PScell addition or change; recording random access information of the PScell addition or change; recording type information of the successful PScell addition or change report; or recording cell radio network temporary identifier (C-RNTI) information of a target cell of the PScell addition or change.

It should be noted that in an embodiment of the present invention, the terminal device may receive a radio resource control (RRC) reconfiguration message sent by the network side device before responding to the triggering of the successful PScell addition or change report. The terminal device may initiate the PScell addition or change according to the RRC reconfiguration message. Moreover, the terminal device may initiate the PScell addition or change, and determine the successful PScell addition or change report.

Furthermore, in an embodiment of the present invention, for a multi-radio dual connectivity (MR-DC), the network side device may add or change a PScell through an RRC reconfiguration message. The MR-DC includes an LTE-NR DC, an NR-LTE DC, an NR-NR DC and an LTE-LTE DC of universal mobile communication technologies.

For example, in an embodiment of the present invention, after the terminal device initiates the PScell addition or change, if the terminal device determines that the PScell addition or change is successful, the terminal device determines that a successful PScell addition or change report can be generated, and the terminal device can record relevant information of the PScell addition or change.

In an embodiment of the present invention, when the terminal device records the PLMN list information related to the PScell, the terminal device can, for example, determine at least one information selected by the user from the PLMN information, EPLMN information and RPLMN information, and the terminal device can record the information. The data types corresponding to the PLMN information, EPLMN information and RPLMN information are PLMN-identity list 2 (PLMN-IdentityList2)/PLMN-identity list (PLMN-IdentityList).

For example, the terminal device may add the EPLMN information stored in the terminal device to the PLMN-identity list.

For example, in an embodiment of the present invention, a data type of the random access information is radio access information common (RA-InformationCommon).

For example, in an embodiment of the present invention, the relevant information is recorded in a successful PScell addition or change variable report (VarSuccessPAC-Report).

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the relevant information of the PScell addition or change through different recording methods, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

FIG. 2 is a schematic flowchart of a method for recording relevant information of a successful PScell addition or change report provided in an embodiment of the present invention. The method is performed by a terminal device. As shown in FIG. 2, the method may include a step as follows: at step 201, recording a cell identifier of the PScell addition or change in response to triggering the successful PScell addition or change report, including: recording a source cell identifier of the PScell addition or change in a case that the type information of the successful PScell addition or change report is a successful PScell change report or a successful conditional PScell change report, in which the source cell identifier is a global cell identity of a source cell and a tracking area code of the source cell, or is a physical cell identity of the source cell and a carrier frequency of the source cell; and/or recording a target cell identifier of the PScell addition or change, in which the target cell identifier is a global cell identity of a target cell and a tracking area code of the target cell, or is a physical cell identity of the target cell and a carrier frequency of the target cell.

Further, in an embodiment of the present invention, a data type of the source cell identifier is a cell global identity information logging (CGI-Info-Logging), or a combination of a physical cell identity (PhysCellId) and an absolute radio frequency channel number value (ARFCN-Value); and a data type of the target cell identifier is the CGI-Info-Logging, or a combination of the PhysCellId and the ARFCN-Value.

For example, in an embodiment of the present invention, in the PScell change (PC)/CPC, the source cell identifier recorded by the terminal device can specifically be a global cell identity and a tracking area code (TAC) of the source PScell, or be a physical cell identity (ID) and a carrier frequency of the source PScell. For the PScell addition (PA)/CPA, the sourceCellID is not set.

For example, in an embodiment of the present invention, for the CP/CPC/PA/CPA, the target cell identifier recorded by the terminal device may specifically be a global cell identity and a tracking area code of the target PScell, or be a physical cell ID and a carrier frequency of the target PScell.

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the source cell identifier and/or the target cell identifier of the PScell addition or change, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

For example, a method for recording relevant information of a successful PScell addition or change report provided in an embodiment of the present invention is performed by a terminal device and includes a step as follows: recording a measurement result of the PScell addition or change in response to triggering the successful PScell addition or change report, including at least one of: recording a source cell measurement result of the PScell addition or change; recording a target cell measurement result of the PScell addition or change; or recording a neighboring cell measurement result of the PScell addition or change.

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording at least one of the source cell measurement result, the target cell measurement result or the neighboring cell measurement result of the PScell addition or change, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

FIG. 3 is a schematic flowchart of a method for recording relevant information of a successful PScell addition or change report provided in an embodiment of the present invention. The method is performed by a terminal device. As shown in FIG. 3, the method may include a step as follows.

In step 301, a source cell measurement result of the PScell addition or change is recorded in response to triggering the successful PScell addition or change report.

For example, in an embodiment of the present invention, the source cell measurement result includes at least one of: at least one of a reference signal received power (RSRP), a reference signal received quality (RSRQ), or a signal to interference plus noise ratio (SINR) of a cell-level synchronization signal block (SSB) or channel state information-reference signal (CSI-RS); or at least one of an RSRP, an RSRQ, or an SINR of each SSB or CSI-RS.

For example, in an embodiment of the present invention, the source cell measurement result recorded by the terminal device may be specifically be the latest cell-level RSRP, RSRQ and SINR of a source PScell measured by the terminal device before sending the RRC reconfiguration completion message.

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the source cell measurement result of the PScell addition or change, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

FIG. 4 is a schematic flowchart of a method for recording relevant information of a successful PScell addition or change report provided in an embodiment of the present invention. The method is performed by a terminal device. As shown in FIG. 4, the method may include a step as follows.

In step 401, a target cell measurement result of the PScell addition or change is recorded in response to triggering the successful PScell addition or change report.

For example, in an embodiment of the present invention, the target cell measurement result includes at least one of: at least one of a reference signal received power (RSRP), a reference signal received quality (RSRQ), or a signal to interference plus noise ratio (SINR) of a cell-level synchronization signal block (SSB) or channel state information-reference signal (CSI-RS); or at least one of an RSRP, an RSRQ, or an SINR of each SSB or CSI-RS.

For example, in an embodiment of the present invention, the target cell measurement result recorded by the terminal device may specifically be the latest cell-level RSRP, RSRQ and SINR of a target PScell measured by the terminal device before sending the RRC reconfiguration completion message.

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the target cell measurement result of the PScell addition or change, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

FIG. 5 is a schematic flowchart of a method for recording relevant information of a successful PScell addition or change report provided in an embodiment of the present invention. The method is performed by a terminal device. As shown in FIG. 5, the method may include a step as follows.

In step 501, a neighboring cell measurement result of the PScell addition or change is recorded in response to triggering the successful PScell addition or change report.

Further, in an embodiment of the present invention, the terminal device records a new air (NR) measurement result of the PScell addition or change and an evolved UMTS terrestrial radio access network (EUTRA) measurement result of the PScell addition or change in response to triggering the successful PScell addition or change report.

For example, in an embodiment of the present invention, recording the neighboring cell measurement result of the PScell addition or change by the terminal device may specifically be recording an NR measurement result of the PScell addition or change and an EUTRA measurement result of the PScell addition or change.

For example, in an embodiment of the present invention, a data type of the NR measurement result is an NR network measurement result list MeasResultList2NR, and a data type of the EUTRA measurement result is a long-term evolution (LTE) network measurement result list MeasResultList2EUTRA.

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the neighboring cell measurement result of the PScell addition or change, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

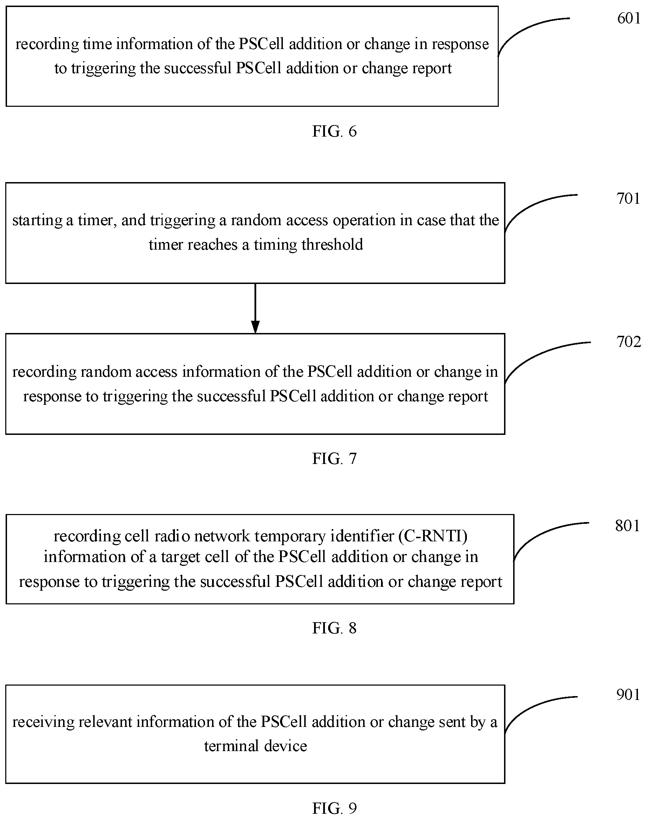

FIG. 6 is a schematic flowchart of a method for recording relevant information of a successful PScell addition or change report provided in an embodiment of the present invention. The method is performed by a terminal device. As shown in FIG. 6, the method may include a step as follows.

In step 601, time information of the PScell addition or change is recorded in response to triggering the successful PScell addition or change report.

Further, in an embodiment of the present invention, a data type of the time information is an integer type (INTEGER).

For example, in an embodiment of the present invention, recording the time information of the PScell addition or change includes at least one of: recording a time interval between a reception time point of the PScell addition or change and an execution starting time point of the PScell addition or change; or recording user plane interruption time information of the PScell change, in which the user plane interruption time information is used to indicate a user plane interruption time of the terminal device when performing the PScell change.

For example, in an embodiment of the present invention, the terminal device determines that the secondaryCellGroup in the RRC reconfiguration message contains the reconfigurationWithSync configuration, then the terminal device sets the CPAC reconfiguration time information to a time interval from a reception time point when the terminal device receives the last conditional reconfiguration message to a time point when the terminal device initiates the conditional reconfiguration of the target PScell. The conditional reconfiguration message includes the conditional reconfiguration of the target PScell.

For example, in an embodiment of the present invention, if the terminal device determines that the type information of the successful PAC report is the PC or CPC, the time information recorded by the terminal device can specifically be user plane interruption time information upInterruptionTimeAtCPC, where upInterruptionTimeAtCPC is a time interval between a time point when the last PDCP PDU is received from the source PScell and a time point when the first PDCP PDU is received from the target PScell (optionally, the PDCP PDU is a non-duplicate PDCP PDU).

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the time information of the PScell addition or change, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

FIG. 7 is a schematic flowchart of a method for recording relevant information of a successful PScell addition or change report provided in an embodiment of the present invention. The method is performed by a terminal device. As shown in FIG. 7, the method may include steps as follows.

In step 701, a timer is started, and a random access operation is triggered in a case that the timer reaches a timing threshold.

In step 702, random access information of the PScell addition or change is recorded in response to triggering the successful PScell addition or change report.

Further, in an embodiment of the present invention, a triggering condition for recording the random access information of the PScell addition or change by the terminal device is: starting a timer, and triggering a random access operation in a case that the timer reaches a timing threshold.

For example, in an embodiment of the present invention, the timer may specifically be timer T304. If the successful PAC report on the terminal device is triggered by timer T304 satisfying the triggering condition, the terminal device starts the timer when it receives an RRC reconfiguration message sent by a network side device. When the timer reaches the timing threshold, the PScell addition or change on the terminal device fails, and the terminal device triggers the random access operation.

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the random access information of the PScell addition or change, so as to further confirm the accuracy of recording the random access information of the successful PScell addition or change. The present invention provides a solution for the situation where "the recording of relevant information of a successful PScell addition or change report is not supported for now", so as to provide additional confirmation opportunities and ensure the success rate of the PScell addition or change.

FIG. 8 is a schematic flowchart of a method for recording relevant information of a successful PScell addition or change report provided in an embodiment of the present invention. The method is performed by a terminal device. As shown in FIG. 8, the method may include a step as follows.

In step 801, cell radio network temporary identifier (C-RNTI) information of a target cell of the PScell addition or change is recorded in response to triggering the successful PScell addition or change report.

Further, in an embodiment of the present invention, a data type of the C-RNTI information is a radio network temporary identifier value (RNTI-Value).

For example, in an embodiment of the present invention, the C-RNTI information recorded by the terminal device may specifically be a C-RNTI allocated to a target cell added by PScell addition (including CPA), or a target cell changed by PScell change (including CPC).

In conclusion, in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the C-RNTI information of the PScell addition or change, so as to further confirm the accuracy of recording the random access information of the successful PScell addition or change. The present invention provides a solution for the situation where "the recording of relevant information of a successful PScell addition or change report is not supported for now", so as to provide additional confirmation opportunities and ensure the success rate of the PScell addition or change.

FIG. 9 is a schematic flowchart of a method for recording relevant information of a successful PScell addition or change report provided in an embodiment of the present invention. The method is performed by a network side device. As shown in FIG. 9, the method may include a step as follows.

In step 901, relevant information of the PScell addition or change sent by a terminal device is received.

In an embodiment of the present invention, receiving the relevant information of the PScell addition or change sent by the terminal device includes at least one of: receiving PLMN list information related to a PScell sent by the terminal device, in which the PLMN list information includes at least one of PLMN information, EPLMN information or RPLMN information; receiving a cell identifier of the PScell addition or change sent by the terminal device; receiving a measurement result of the PScell addition or change sent by the terminal device; receiving time information of the PScell addition or change sent by the terminal device; receiving random access information of the PScell addition or change sent by the terminal device; receiving type information of the successful PScell addition or change report sent by the terminal device; or receiving C-RNTI information of a target cell of the PScell addition or change sent by the terminal device.

In an embodiment of the present invention, receiving the measurement result of the PScell addition or change sent by the terminal device includes at least one of: receiving a source cell measurement result of the PScell addition or change sent by the terminal device; receiving a target cell measurement result of the PScell addition or change sent by the terminal device; or receiving a neighboring cell measurement result of the PScell addition or change sent by the terminal device.

In conclusion, in the embodiments of the present invention, the terminal device may send relevant information of the PScell addition or change to a network side device after recording the relevant information in response to triggering the successful PScell addition or change report. In the embodiments of the present invention, the network side device may receive relevant information of the PScell addition or change when the successful PScell addition or change is reported by receiving the relevant information of the PScell addition or change sent by the terminal device, so as to further confirm the accuracy of the successful PScell addition or change. The present invention provides a solution for the situation where "the recording of relevant information of a successful PScell addition or change report is not supported for now", so as to provide additional confirmation opportunities and ensure the success rate of the PScell addition or change.

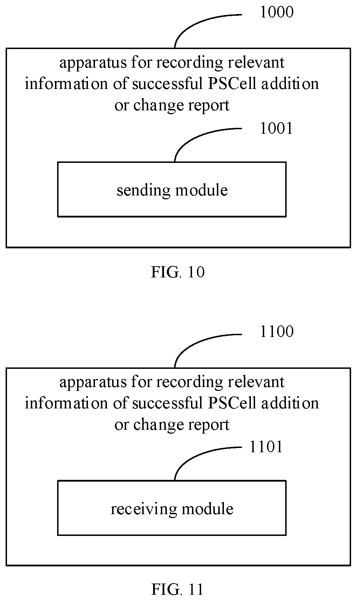

FIG. 10 is a schematic diagram of an apparatus for recording relevant information of a successful PScell addition or change report provided in an embodiment of the present invention. As shown in FIG. 10, the apparatus 1000 may include a recording module 1001 configured to record relevant information of the PScell addition or change in response to triggering the successful PScell addition or change report.

In conclusion, in the apparatus for recording relevant information of the successful PScell addition or change report provided in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the relevant information of the PScell addition, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

Optionally, in an embodiment of the present invention, the recording module 1001 is configured to record the relevant information of the PScell addition or change, including at least one of: recording public land mobile network (PLMN) list information related to a PScell, in which the PLMN list information includes at least one of PLMN information, equivalent local public land mobile network (EPLMN) information or registered public land mobile network (RPLMN) information; recording a cell identifier of the PScell addition or change; recording a measurement result of the PScell addition or change; recording time information of the PScell addition or change; recording random access information of the PScell addition or change; recording type information of the successful PScell addition or change report; or recording cell radio network temporary identifier (C-RNTI) information of a target cell of the PScell addition or change.

Optionally, in an embodiment of the present invention, the recording module 1001 is configured to record the cell identifier of the PScell addition or change, including: recording a source cell identifier of the PScell addition or change in a case that the type information of the successful PScell addition or change report is a successful PScell change report or a successful conditional PScell change report, in which the source cell identifier is a global cell identity of a source cell and a tracking area code of the source cell, or is a physical cell identity of the source cell and a carrier frequency of the source cell; and/or recording a target cell identifier of the PScell addition or change, in which the target cell identifier is a global cell identity of the target cell and a tracking area code of the target cell, or is a physical cell identity of the target cell and a carrier frequency of the target cell.

Optionally, in an embodiment of the present invention, a data type of the source cell identifier is a cell global identity information logging (CGI-Info-Logging), or a combination of a physical cell identity (PhysCellId) and an absolute radio frequency channel number value (ARFCN-Value); and a data type of the target cell identifier is the CGI-Info-Logging, or a combination of the PhysCellId and the ARFCN-Value.

Optionally, in an embodiment of the present invention, the recording module 1001 is configured to record the measurement result of the PScell addition or change, including at least one of: recording a source cell measurement result of the PScell addition or change; recording a target cell measurement result of the PScell addition or change; or recording a neighboring cell measurement result of the PScell addition or change.

Optionally, in an embodiment of the present invention, the source cell measurement result includes at least one of: at least one of a reference signal received power (RSRP), a reference signal received quality (RSRQ), or a signal to interference plus noise ratio (SINR) of a cell-level synchronization signal block (SSB) or channel state information-reference signal (CSI-RS); or at least one of an RSRP, an RSRQ, or an SINR of each SSB or CSI-RS.

Optionally, in an embodiment of the present invention, the recording module 1001 is configured to record the neighboring cell measurement result of the PScell addition or change, including: recording a new air (NR) measurement result of the PScell addition or change and an evolved UMTS (universal mobile telecommunications system) terrestrial radio access network (EUTRA) measurement result of the PScell addition or change.

Optionally, in an embodiment of the present invention, a data type of the NR measurement result is an NR network measurement result list MeasResultList2NR, and a data type of the EUTRA measurement result is a long-term evolution (LTE) network measurement result list MeasResultList2EUTRA.

Optionally, in an embodiment of the present invention, the recording module 1001 is configured to record the time information of the PScell addition or change, including at least one of: recording a time interval between a reception time point of the PScell addition or change and an execution starting time point of the PScell addition or change; or recording user plane interruption time information of the PScell change, in which the user plane interruption time information is used to indicate a user plane interruption time of the terminal device when performing the PScell change.

Optionally, in an embodiment of the present invention, a data type of the time information is an integer type (INTEGER).

Optionally, in an embodiment of the present invention, a triggering condition for recording the random access information of the PScell addition or change is: starting a timer, and triggering a random access operation in a case that the timer reaches a timing threshold.

Optionally, in an embodiment of the present invention, a data type of the random access information is radio access information common (RA-InformationCommon).

Optionally, in an embodiment of the present invention, a data type of the C-RNTI information is a radio network temporary identifier value (RNTI-Value).

Optionally, in an embodiment of the present invention, the relevant information is recorded in a successful PScell addition or change variable report (VarSuccessPAC-Report).

FIG. 11 is a schematic diagram of an apparatus for recording relevant information of a successful PScell addition or change report provided in an embodiment of the present invention. As shown in FIG. 11, the apparatus 1100 may include a receiving module 1101 configured to receive relevant information of the PScell addition or change sent by a terminal device.

In conclusion, in the apparatus for recording relevant information of the successful PScell addition or change report provided in the embodiments of the present invention, the terminal device may record relevant information of the PScell addition or change in response to triggering the successful PScell addition or change report. In the embodiments of the present invention, the terminal device may record relevant information of the PScell addition or change when reporting the successful PScell addition or change by recording the relevant information of the PScell addition or change through different recording methods, so as to further confirm the successful PScell addition or change. The present invention provides a solution for the situation where "the recording of relevant information of a successful PScell addition or change report is not supported for now", so as to provide additional confirmation opportunities and ensure the success rate of the PScell addition or change.

Optionally, in an embodiment of the present invention, the receiving module 1101 is configured to receive the relevant information of the PScell addition or change sent by the terminal device, including at least one of: receiving PLMN list information related to a PScell sent by the terminal device, in which the PLMN list information includes at least one of PLMN information, EPLMN information or RPLMN information; receiving a cell identifier of the PScell addition or change sent by the terminal device; receiving a measurement result of the PScell addition or change sent by the terminal device; receiving time information of the PScell addition or change sent by the terminal device; receiving random access information of the PScell addition or change sent by the terminal device; receiving type information of the successful PScell addition or change report sent by the terminal device; or receiving C-RNTI information of a target cell of the PScell addition or change sent by the terminal device.

Optionally, in an embodiment of the present invention, the receiving module 1101 is configured to receive the measurement result of the PScell addition or change sent by the terminal device, including at least one of: receiving a source cell measurement result of the PScell addition or change sent by the terminal device; receiving a target cell measurement result of the PScell addition or change sent by the terminal device; or receiving a neighboring cell measurement result of the PScell addition or change sent by the terminal device.

In conclusion, in the embodiments of the present invention, the terminal device may send relevant information of the PScell addition or change to a network side device after recording the relevant information in response to triggering the successful PScell addition or change report. In the embodiments of the present invention, the network side device may receive relevant information of the PScell addition or change when the successful PScell addition or change is reported by receiving the relevant information of the PScell addition or change sent by the terminal device, so as to further confirm the accuracy of the successful PScell addition or change. The present invention provides a solution for the situation where "the recording of relevant information of a successful PScell addition or change report is not supported for now", so as to provide additional confirmation opportunities and ensure the success rate of the PScell addition or change.

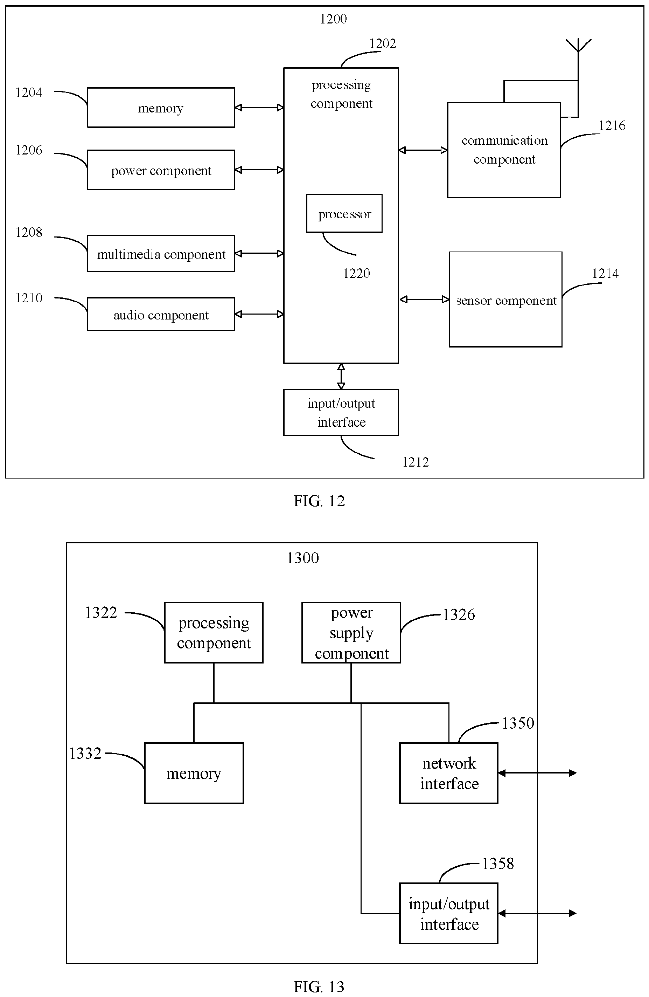

FIG. 12 is a block diagram of a user equipment (UE) 1200 provided in an embodiment of the present invention. For example, the UE 1200 can be a mobile phone, a computer, a digital broadcast terminal, a messaging device, a game console, a tablet device, a medical device, a fitness device, a personal digital assistant, or the like.

Referring to FIG. 12, the UE 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the UE 1200, such as the operations associated with display, phone calls, data communications, camera operations, and recording operations. The processing component 1202 can include one or more processors 1220 to execute instructions to perform all or some of the steps in the above-described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the UE 1200. Examples of such data include instructions for any applications or methods operated on the UE 1200, contact data, phonebook data, messages, pictures, videos, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, or a magnetic or optical disk.

The power component 1206 provides power to various components of the UE 1200. The power component 1206 may include a power management system, one or more power sources, and any other components associated with the generation, management, and distribution of power in the UE 1200.

The multimedia component 1208 includes a screen providing an output interface between the UE 1200 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1208 includes a front camera and/or a rear camera. The front camera and/or the rear camera may receive an external multimedia datum while the UE 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone (MIC) configured to receive an external audio signal when the UE 1200 is in an operation mode, such as a call mode, a recording mode, and a voice recognition mode. The received audio signal may be further stored in the memory 1204 or transmitted via the communication component 1216. In some embodiments, the audio component 1210 further includes a speaker to output audio signals.

The I/O interface 1212 provides an interface between the processing component 1202 and peripheral interface modules, such as keyboards, click wheels, buttons, and the like. The buttons may include, but are not limited to, a home button, a volume button, a starting button, and a locking button.

The sensor component 1214 includes one or more sensors to provide status assessments of various aspects of the UE 1200. For instance, the sensor component 1214 may detect an open/closed status of the UE 1200, relative positioning of components, e.g., the display and the keypad, of the UE 1200, a change in position of the UE 1200 or a component of the UE 1200, a presence or absence of user contact with the UE 1200, an orientation or an acceleration/deceleration of the UE 1200, and a change in temperature of the UE 1200. The sensor component 1214 may include a proximity sensor configured to detect the presence of nearby objects without any physical contact. The sensor component 1214 may further include a light sensor, such as a CMOS or CCD image sensor, for use in imaging applications. In some embodiments, the sensor component 1214 may further include an accelerometer sensor, a gyroscope sensor, a magnetic sensor, a pressure sensor, or a temperature sensor.

The communication component 1216 is configured to facilitate communication, wired or wireless, between the UE 1200 and other devices. The UE 1200 can access a wireless network based on a communication standard, such as Wi-Fi, 2G, or 3G, or a combination thereof. In an illustrative embodiment, the communication component 1216 receives a broadcast signal or broadcast associated information from an external broadcast management system via a broadcast channel. In an illustrative embodiment, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

FIG. 13 is a block diagram of a network device 1300 provided in an embodiment of the present invention. For example, the network device 1300 may be provided as a network side device. Referring to FIG. 13, the network device 1300 includes a processing component 1322, which further includes at least one processor; and a memory resource represented by a memory 1332 for storing instructions executable by the processing component 1322, such as an application program. The application program stored in the memory 1332 may include one or more modules each corresponding to a set of instructions. In addition, the processing component 1322 is configured to execute instructions to perform any method of the above-mentioned methods applied to the network device, for example, the method shown in FIG. 1.

The network device 1300 may also include a power supply component 1326 configured to perform power management of the network device 1300, a wired or wireless network interface 1350 configured to connect the network device 1300 to a network, and an input/output (I/O) interface 1358. The network device 1300 can operate based on an operating system stored in the memory 1332, such as Windows Server TM, Mac OS X TM, Unix TM, Linux TM, Free BSD TM or the like.

In the above embodiments provided in the present invention, the methods provided in the embodiments of the present invention are introduced from the perspectives of the network device and the UE respectively. In order to implement the various functions in the above-mentioned methods provided in the embodiments of the present invention, the network device and the UE may include a hardware structure and a software module to implement the above-mentioned various functions in the form of a hardware structure, a software module, or a hardware structure plus a software module. A certain one of the above functions may be implemented in the form of a hardware structure, a software module, or a hardware structure plus a software module.

In the above embodiments provided in the present invention, the methods provided in the embodiments of the present invention are introduced from the perspectives of the network device and the UE respectively. In order to implement the various functions in the above-mentioned methods provided in the embodiments of the present invention, the network device and the UE may include a hardware structure and a software module to implement the above-mentioned various functions in the form of a hardware structure, a software module, or a hardware structure plus a software module. A certain one of the above functions may be implemented in the form of a hardware structure, a software module, or a hardware structure plus a software module.

An embodiment of the present invention provides a communication device. The communication device may include a transceiving module and a processing module. The transceiving module may include a sending module and/or a receiving module. The sending module is used to implement a sending function, and the receiving module is used to implement a receiving function. The transceiving module can implement a sending function and/or a receiving function.

The communication device may be a terminal device (such as the terminal device in the above-mentioned method embodiments), or an apparatus in a terminal device, or a device that can be used in cooperation with a terminal device. Alternatively, the communication device may be a network device, or an apparatus in a network device, or a device that can be used in cooperation with a network device.

Another communication device is provided in an embodiment of the present invention. The communication device may be a network device, or may be a terminal device (such as the terminal device in the above-mentioned method embodiments), or may be a chip, a chip system, or a processor supporting the network device to implement the above-mentioned method, or may be a chip, a chip system or a processor supporting the terminal device to implement the above-mentioned method. The communication device may be used to implement the methods as described in the above-mentioned method embodiments. For details, reference may be made to the description in the above-mentioned method embodiments.

The communication device may include one or more processors. The processor may be a general-purpose processor, a special-purpose processor, or the like. It may be, for example, a baseband processor or a central processor. The baseband processor may be used to process a communication protocol and communication data, and the central processor may be used to control a communication device (such as a network device, a baseband chip, a terminal device, a terminal device chip, a DU, a CU, or the like), execute a computer program, and process data of the computer program.

Optionally, the communication device may further include one or more memories on which the computer program may be stored, and the processor is configured to execute the computer program to cause the communication device to perform the method as described in the above-mentioned method embodiments. Optionally, the memory may also have data stored therein. The communication device and the memory may be provided independently or integrated together.

Optionally, the communication device may further include a transceiver and an antenna. The transceiver may be referred to as a transceiving unit, a transceiving device, a transceiving circuit or the like for implementing a transceiving function. The transceiver may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device may further include one or more interface circuits. The interface circuit is configured to receive and transmit a code instruction to the processor. The processor is configured to run the code instruction to enable the communication device to perform the method described in any of the above-mentioned method embodiments.

The communication device is a terminal device (such as the terminal device in the above-mentioned method embodiments), and the processor is configured to execute any one of the methods shown in FIGS. 1 to 8.

The communication device is a network side device, and the processor is configured to execute any one of the methods shown in FIG. 9.

In an implementation, the processor may include a transceiver for implementing receiving and transmitting functions. For example, the transceiver may be a transceiving circuit, an interface, or an interface circuit. The transceiving circuit, the interface, or the interface circuit for implementing the receiving and transmitting functions may be separate or integrated together. The transceiving circuit, the interface or the interface circuit may be configured to read and write code/data, or may be configured to transmit or transfer signals.

In an implementation, the processor may store the computer program that, when running on the processor, enables the communication device to perform the method described in the above-mentioned method embodiments. The computer program may be embedded in the processor, in which case the processor may be implemented by hardware.

In an implementation, the communication device may include a circuit that may perform the transmitting, receiving or communicating function in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The communication device described in the above embodiments may be a network device or a terminal device (such as the terminal device in the above-mentioned method embodiments), but the scope of the communication device described in the present invention is not limited thereto. The structure of the communication device may not be limited. The communication device may be a stand-alone device or may be part of a larger device. For example, the communication device may be: (1) a stand-alone integrated circuit (IC), or a chip, or a chip system or subsystem; (2) a set of one or more ICs, in which optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

In the case where the communication device may be a chip or a chip system, the chip includes a processor and an interface. The number of processors may be one or more, and the number of interfaces may be more than one.

Optionally, the chip further includes a memory for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the function, but such an implementation should not be understood as extending beyond the protection scope of embodiments of the present invention.

The present invention further provides a readable storage medium having stored therein instructions that, when executed by a computer, cause functions of any one of the above method embodiments to be implemented.

The present invention further provides a computer program product that, when executed by a computer, causes functions of any one of the above method embodiments to be implemented.

All or some of the above embodiments may be implemented by a software, a hardware, a firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present invention will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (for example, in an infrared, wireless, or microwave manner, or the like). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the terms "first", "second", "third", "A", "B", "C" and "D" have no order of precedence or size.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for recording relevant information of a successful primary secondary cell (PScell) addition or change report, performed by a terminal device, comprising:
recording relevant information of a PScell addition or change in response to triggering the successful PScell addition or change report.

2. The method of claim 1, wherein recording the relevant information of the PScell addition or change comprises at least one of:
recording public land mobile network (PLMN) list information related to a PScell, wherein the PLMN list information comprises at least one of PLMN information, equivalent local public land mobile network (EPLMN) information or registered public land mobile network (RPLMN) information;
recording a cell identifier of the PScell addition or change;
recording a measurement result of the PScell addition or change;
recording time information of the PScell addition or change;
recording random access information of the PScell addition or change;
recording type information of the successful PScell addition or change report; or
recording cell radio network temporary identifier (C-RNTI) information of a target cell of the PScell addition or change.

3. The method of claim 2, wherein recording the cell identifier of the PScell addition or change comprises:
recording a source cell identifier of the PScell addition or change in a case that the type information of the successful PScell addition or change report is a successful PScell change report or a successful conditional PScell change report, wherein the source cell identifier is a global cell identity of a source cell and a tracking area code of the source cell, or is a physical cell identity of the source cell and a carrier frequency of the source cell; and/or
recording a target cell identifier of the PScell addition or change, wherein the target cell identifier is a global cell identity of the target cell and a tracking area code of the target cell, or is a physical cell identity of the target cell and a carrier frequency of the target cell.

4. The method of claim 3, wherein a data type of the source cell identifier is cell global identity information logging (CGI-Info-Logging), or a combination of a physical cell identity (PhysCellId) and an absolute radio frequency channel number value (ARFCN-Value); and a data type of the target cell identifier is the CGI-Info-Logging, or a combination of the PhysCellId and the ARFCN-Value.

5. The method of claim 2, wherein recording the measurement result of the PScell addition or change comprises at least one of:
recording a source cell measurement result of the PScell addition or change;
recording a target cell measurement result of the PScell addition or change; or
recording a neighboring cell measurement result of the PScell addition or change.

6. The method of claim 5, wherein the source cell measurement result comprises at least one of:
at least one of a reference signal received power (RSRP), a reference signal received quality (RSRQ), or a signal to interference plus noise ratio (SINR) of a cell-level synchronization signal block (SSB) or channel state information-reference signal (CSI-RS); or
at least one of an RSRP, an RSRQ, or an SINR of each SSB or CSI-RS.

7. The method of claim 5, wherein recording the neighboring cell measurement result of the PScell addition or change comprises:
recording a new air (NR) measurement result of the PScell addition or change and an evolved universal mobile telecommunications system terrestrial radio access network (EUTRA) measurement result of the PScell addition or change.

8. The method of claim 7, wherein a data type of the NR measurement result is an NR network measurement result list MeasResultList2NR, and a data type of the EUTRA measurement result is a long-term evolution (LTE) network measurement result list MeasResultList2EUTRA.

9. The method of claim 2, wherein recording the time information of the PScell addition or change comprises at least one of:
recording a time interval between a reception time point of the PScell addition or change and an execution starting time point of the PScell addition or change; or
recording user plane interruption time information of the PScell change, wherein the user plane interruption time information is used to indicate a user plane interruption time of the terminal device when performing the PScell change.

10. The method of claim 9, wherein a data type of the time information is an integer type (INTEGER).

11. The method of claim 2, wherein a triggering condition for recording the random access information of the PScell addition or change is:
starting a timer, and triggering a random access operation in a case that the timer reaches a timing threshold.

12. The method of claim 2, wherein a data type of the random access information is radio access information common (RA-InformationCommon).

13. The method of claim 2, wherein a data type of the C-RNTI information is a radio network temporary identifier value (RNTI-Value).

14. The method of claim 1, wherein the relevant information is recorded in a successful PScell addition or change variable report (VarSuccessPAC-Report).

15. A method for recording relevant information of a successful primary secondary cell (PScell) addition or change report, performed by a network side device, comprising:
receiving relevant information of a PScell addition or change sent by a terminal device.

16. The method of claim 15, wherein receiving the relevant information of the PScell addition or change sent by the terminal device comprises at least one of:
receiving public land mobile network (PLMN) list information related to a PScell sent by the terminal device, wherein the PLMN list information comprises at least one of PLMN information, equivalent local public land mobile network (EPLMN) information or registered public land mobile network (RPLMN) information;
receiving a cell identifier of the PScell addition or change sent by the terminal device;
receiving a measurement result of the PScell addition or change sent by the terminal device;
receiving time information of the PScell addition or change sent by the terminal device;
receiving random access information of the PScell addition or change sent by the terminal device;
receiving type information of the successful PScell addition or change report sent by the terminal device; or
receiving cell radio network temporary identifier (C-RNTI) information of a target cell of the PScell addition or change sent by the terminal device.

17. The method of claim 9, wherein receiving the measurement result of the PScell addition or change sent by the terminal device comprises at least one of:
receiving a source cell measurement result of the PScell addition or change sent by the terminal device;
receiving a target cell measurement result of the PScell addition or change sent by the terminal device; or
receiving a neighboring cell measurement result of the PScell addition or change sent by the terminal device.

18. An apparatus for recording relevant information of a successful PScell addition or change report, comprising:
a recording module configured to record relevant information of the PScell addition or change in response to triggering the successful PScell addition or change report.

19. An apparatus for recording relevant information of a successful PScell addition or change report, comprising:
a receiving module configured to receive relevant information of the PScell addition or change sent by a terminal device.

20. A communication device, comprising:
a processor; and
a memory having stored therein a computer program,
wherein the processor is configured to execute the computer program stored in the memory to cause the device to perform the method of any one of claims 1 to 14.

21. A communication device, comprising:
a processor; and
a memory having stored therein a computer program,
wherein the processor is configured to execute the computer program stored in the memory to cause the device to perform the method of any one of claims 15 to 17.

22. A communication device, comprising:
a processor; and
an interface circuit configured to receive code instructions and transmit the code instructions to the processor,
wherein the processor is configured to run the code instructions to perform the method of any one of claims 1 to 14.

23. A communication device, comprising:
a processor; and
an interface circuit configured to receive code instructions and transmit the code instructions to the processor,
wherein the processor is configured to run the code instructions to perform the method of any one of claims 15 to 17.

24. A computer-readable storage medium for storing instructions that, when executed, cause the method of any one of claims 1 to 14 to be implemented.

25. A computer-readable storage medium for storing instructions that, when executed, cause the method of any one of claims 15 to 17 to be implemented.
